# EUROPEAN PATENT APPLICATION

(11) **EP 4 826 432 A1**
(43) Date of publication of application: **21.10.2026**
(21) Application number: 24902286.4
(22) Date of filing: 25.09.2024
(51) Int. Cl.: G02B 26/00, G02B 3/14, G02B 1/06

(54) **OPTICAL ELEMENT, LENS, OPTICAL SYSTEM AND ELECTRONIC DEVICE**

(30) Priority: 12.12.2023 CN 202323394938 U
(71) Applicant: BYD Company Limited, Shenzhen, Guangdong 518118 (CN)
(72) Inventor: GONG, Qing, Shenzhen, Guangdong 518118 (CN); SONG, Yi, Shenzhen, Guangdong 518118 (CN); SUN, Yaxuan, Shenzhen, Guangdong 518118 (CN); WANG, Baoqing, Shenzhen, Guangdong 518118 (CN); LIU, Yan, Shenzhen, Guangdong 518118 (CN)
(74) Representative: Mathys & Squire
(86) International application number: PCT/CN2024/121188
(87) International publication number: WO 2025/123860

(57) **Abstract**

An electronic device, comprising an optical system provided with an optical element (100) or a lens having the optical element (100). The optical element (100) comprises: a base body (100a), a first light-transmitting plate (201), a second light-transmitting plate (202), and a flow guide tube (210); an optical channel is provided in the base body (100a); the first light-transmitting plate (201) and the second light-transmitting plate (202) respectively cover two ends of the optical channel to form an accommodating cavity (110), and the accommodating cavity (110) comprises a first chamber(111) close to the first light-transmitting plate (201) and a second chamber (112) close to the second light-transmitting plate (202); the first chamber (111) is suitable for being filling with a gaseous medium, and the second chamber (112) is suitable for being filling with a liquid medium (121); the flow guide tube (210) is in communication with the second chamber (112), and is used for injecting or extracting the liquid medium (121) into the second chamber (112) so as to adjust the curvature of a gas-liquid two-phase interface (120) formed by the gaseous medium and the liquid medium (121).

## Description

### CROSS-REFERENCE TO RELATED APPLICATIONS

This application claims priority to Chinese Patent Application No. 202323394938.X, filed on December 12, 2023 and entitled "OPTICAL ELEMENT, LENS, OPTICAL SYSTEM, AND ELECTRONIC DEVICE", which is incorporated herein by reference in its entirety for all purposes.

### TECHNICAL FIELD

This application belongs to the field of optical element technologies, and specifically, to an optical element, a lens, an optical system, and an electronic device.

### BACKGROUND

In related technologies, a liquid lens includes a base body and a transparent liquid covering two ends of the base body. An accommodating cavity is provided in the base body and is configured to accommodate the transparent liquid. By changing a volume of the transparent liquid in the accommodating cavity, a light-transmitting film is caused to deform into a convex or concave shape, thereby achieving a zooming effect of the liquid lens. However, in this liquid lens structure, non-uniform deformation of the light-transmitting film during zooming causes significant aberrations. In addition, a rough surface of the light-transmitting film also affects performance of the liquid lens.

### SUMMARY

This application aims to provide an optical element, a lens, an optical system, and an electronic device, which can resolve the following problem: in a liquid lens structure in the related technologies, use performance of the liquid lens is affected by non-uniform deformation and rough surface of the light-transmitting film.

To resolve the foregoing technical problem, this application is implemented as follows:
According to a first aspect, an embodiment of this application provides an optical element, including: a base body, a first light-transmitting plate, a second light-transmitting plate, and a flow guide tube.

An optical channel is provided in the base body, the first light-transmitting plate and the second light-transmitting plate respectively cover two ends of the optical channel to form an accommodating cavity, and the accommodating cavity includes a first chamber close to the first light-transmitting plate and a second chamber close to the second light-transmitting plate.

The first chamber is adapted to be filled with a gaseous medium, and the second chamber is adapted to be filled with a liquid medium. The flow guide tube is in communication with the second chamber, and is configured to inject the liquid medium into or extract the liquid medium from the second chamber, to adjust a curvature of a gas-liquid two-phase interface formed by the gaseous medium and the liquid medium.

Optionally, a contact angle between an inner wall of the second chamber and the liquid medium is smaller than a contact angle between an inner wall of the first chamber and the liquid medium.

Optionally, the contact angle between the inner wall of the second chamber and the liquid medium is less than 90°, the contact angle between the inner wall of the second chamber and the liquid medium is greater than 90°.

Optionally, a flow restriction structure is provided between the inner wall of the first chamber and the inner wall of the second chamber, and the flow restriction structure is configured to restrict the liquid medium from flowing to the first chamber.

Optionally, the flow restriction structure includes a step portion disposed inside the base body. The step portion is disposed between the inner wall of the first chamber and the inner wall of the second chamber, and the step portion is configured to restrict the liquid medium from flowing to the first chamber.

Optionally, a direction from the first light-transmitting plate to the second light-transmitting plate is defined as a first direction. In a direction perpendicular to the first direction, a dimension of the step portion on a side close to the first chamber is D1, and a dimension of the step portion on a side close to the second chamber is D2, satisfying: D1>D2.

Optionally, the base body includes a first base body and a second base body.

One end of the first base body is sleeved over an outer side of one end of the second base body, to form the step portion between the first base body and the second base body.

The first light-transmitting plate is connected to the other end of the first base body, and the first light-transmitting plate and the first base body enclose to define the first chamber; and the second light-transmitting plate is connected to the other end of the second base body, and the second light-transmitting plate and the second base body enclose to define the second chamber.

Optionally, the flow restriction structure includes a modified material layer. The modified material layer is at least partially disposed on a side of the inner wall of the second chamber that is close to the first chamber, and a contact angle between the modified material layer and the liquid medium is less than 90°.

Optionally, the modified material layer is made of a hydrophilic material, and the second chamber is adapted to be filled with an aqueous solution.

Alternatively, the modified material layer is made of an oleophilic material, and the second chamber is adapted to be filled with an oil solution.

Optionally, the direction from the first light-transmitting plate to the second light-transmitting plate is defined as the first direction; and a maximum dimension of the first chamber in the direction perpendicular to the first direction is L1, and a height of the first chamber in the first direction is H1, satisfying: H1/L1≥0.25; and/or
in the direction perpendicular to the first direction, the maximum dimension L1 of the first chamber satisfies: 10 mm≤L1≤500 mm.

Optionally, the direction from the first light-transmitting plate to the second light-transmitting plate is defined as the first direction; and a maximum dimension of the second chamber in the direction perpendicular to the first direction is L2, and a height of the second chamber in the first direction is H2, satisfying: H2/L2≥0.25; and/or
in the direction perpendicular to the first direction, the maximum dimension L2 of the second chamber satisfies: 10 mm≤L2≤500 mm.

According to a second aspect, an embodiment of this application provides a lens, including: a gaseous medium, a liquid medium, and the optical element as described above. The gaseous medium is filled in the first chamber, and the liquid medium is filled in the second chamber, to form the gas-liquid two-phase interface between the first chamber and the second chamber.

According to a third aspect, an embodiment of this application provides an optical system, including: a liquid storage apparatus, a liquid injection pump, and the optical element according to any one of the foregoing descriptions, or the lens as described in the foregoing embodiment. An end of the flow guide tube that is away from the base body is in communication with the liquid storage apparatus, and the liquid injection pump is connected to the flow guide tube.

Optionally, the optical system further includes a monitoring tube and a pressure measuring element. One end of the monitoring tube is in communication with the second chamber, the other end of the monitoring tube is connected to the pressure measuring element, and the pressure measuring element is configured to detect a pressure of the liquid medium in the second chamber.

According to a fourth aspect, an embodiment of this application provides an electronic device, including the optical system according to any of the foregoing descriptions.

In embodiments of this application, the optical channel is provided in the base body, and the first light-transmitting plate and the second light-transmitting plate are disposed at the two ends of the optical channel, so that the first light-transmitting plate, the second light-transmitting plate and the base body may enclose to define the accommodating cavity. In use, the gaseous medium is filled in the first chamber close to the first light-transmitting plate, and the liquid medium is filled in the second chamber close to the second light-transmitting plate, to form the gas-liquid two-phase interface between the first chamber and the second chamber. Further, the flow guide tube is arranged to communicate with the second chamber, and the liquid medium is injected into or extracted from the second chamber through the flow guide tube, to adjust the curvature of the formed gas-liquid two-phase interface, thereby changing a light transmission path in the optical channel and achieving a precise optical zooming effect. The structure is simple and easy to operate.

Additional aspects and advantages of this application are set forth in part in the following descriptions and in part become apparent from the following descriptions, or may be learned through practice of this application.

### BRIEF DESCRIPTION OF DRAWINGS

The above and/or additional aspects and advantages of this application become apparent and readily understood from descriptions of embodiments with reference to the following accompanying drawings.
FIG. 1 is a three-dimensional diagram 1 of an optical element according to an embodiment of this application;
FIG. 2 is a three-dimensional diagram 2 of an optical element according to an embodiment of this application;
FIG. 3 is an exploded view of an optical element according to an embodiment of this application;
FIG. 4 is a sectional view of an optical element according to an embodiment of this application;
FIG. 5 is a diagram of a first type of optical element in a flat lens state according to an embodiment of this application;
FIG. 6 is a diagram of a first type of optical element in a positive lens state according to an embodiment of this application;
FIG. 7 is a diagram of a first type of optical element in a negative lens state according to an embodiment of this application;
FIG. 8 is a diagram of a second type of optical element in a positive lens state according to an embodiment of this application;
FIG. 9 is a diagram of a third type of optical element in a positive lens state according to an embodiment of this application;
FIG. 10 is a diagram showing dimensions of a portion at which a step portion is provided in the optical element according to an embodiment of this application;
FIG. 11 is a diagram of a fourth type of optical element in a flat lens state according to an embodiment of this application;
FIG. 12 is a diagram of a fifth type of optical element in a flat lens state according to an embodiment of this application; and
FIG. 13 is a diagram of an optical system according to an embodiment of this application.

### Reference numerals:

100: optical element; 100a: base body; 101: first base body; 102: second base body; 110: accommodating cavity; 111: first chamber; 112: second chamber; 120: interface; 121: liquid medium; 131: step portion; 132: modified material layer; 140: upper cover plate; 150: lower cover plate; 160: fastener; 201: first light-transmitting plate; 202: second light-transmitting plate; 210: flow guide tube; X: first direction; 310: liquid storage apparatus; 320: liquid injection pump; 330: monitoring tube; 340: pressure measuring element; 350: shut-off valve.

### DESCRIPTION OF EMBODIMENTS

Embodiments of this application are described in detail below, and examples of embodiments are shown in the accompanying drawings. Same or similar reference numerals throughout indicate same or similar elements or elements having same or similar functions. Embodiments described below with reference to the accompanying drawings are examples, and are merely intended to explain this application, but will not be understood as a limitation on this application. All other embodiments obtained by a person of ordinary skill in the art based on embodiments of this application without creative efforts shall fall within the protection scope of this application.

In the specification and claims of this application, a feature limited by a term like "first" or "second" may explicitly or implicitly include one or more such features. In the descriptions of this application, unless otherwise stated, "a plurality of" means two or more. In addition, "and/or" in the specification and claims represents at least one of connected objects, and the character "/" generally indicates that the associated objects have an "or" relationship.

In the descriptions of this application, it will be understood that an orientation or positional relationship indicated by a term like "center", "longitudinal", "transverse", "length", "width", "thickness", "upper", "lower", "front", " back", "left", "right", "vertical", "horizontal", "top", "bottom", "inside", "outside", "clockwise", "counterclockwise", "axial direction", "radial direction", "circumferential direction", or the like is based on an orientation or positional relationship shown in the accompanying drawings, and is merely for ease of describing this application and simplifying the description, but are not intended to indicate or imply that an indicated apparatus or element needs to have a specific orientation or be constructed and operated in a specific orientation, and therefore will not be understood as a limitation on this application.

In the descriptions of this application, it will be noted that, unless otherwise expressly specified and limited, terms "mount", "interconnect", and "connect" will be understood in a broad sense. For example, the terms may indicate a fixed connection, a detachable connection, or an integral connection, may indicate a mechanical connection or an electrical connection, or may indicate a direct interconnection, an indirect interconnection through an intermediate medium, or internal communication between two elements. For a person of ordinary skill in the art, a specific meaning of the foregoing terms in this application will be understood based on a specific situation.

The following describes in detail an optical element, a lens, an optical system, and an electronic device provided in embodiments of this application through specific embodiments and application scenarios thereof with reference to the accompanying drawings.

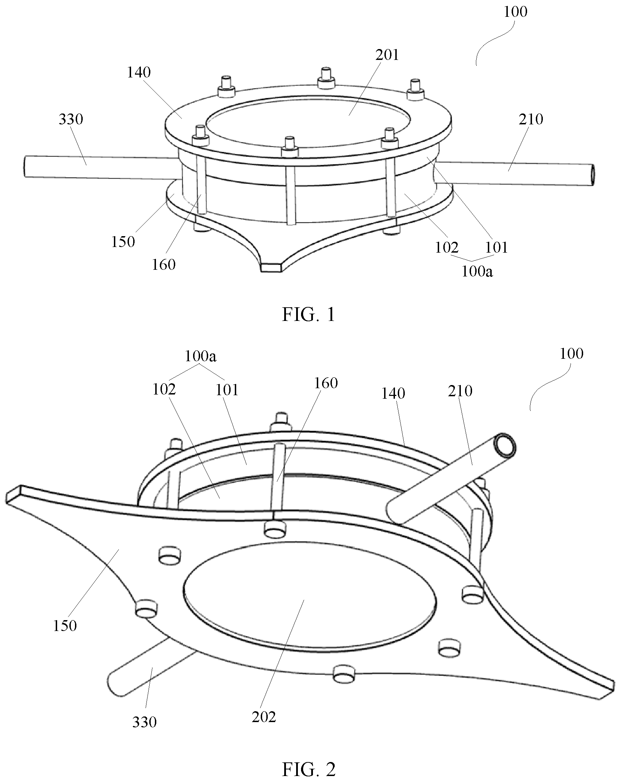

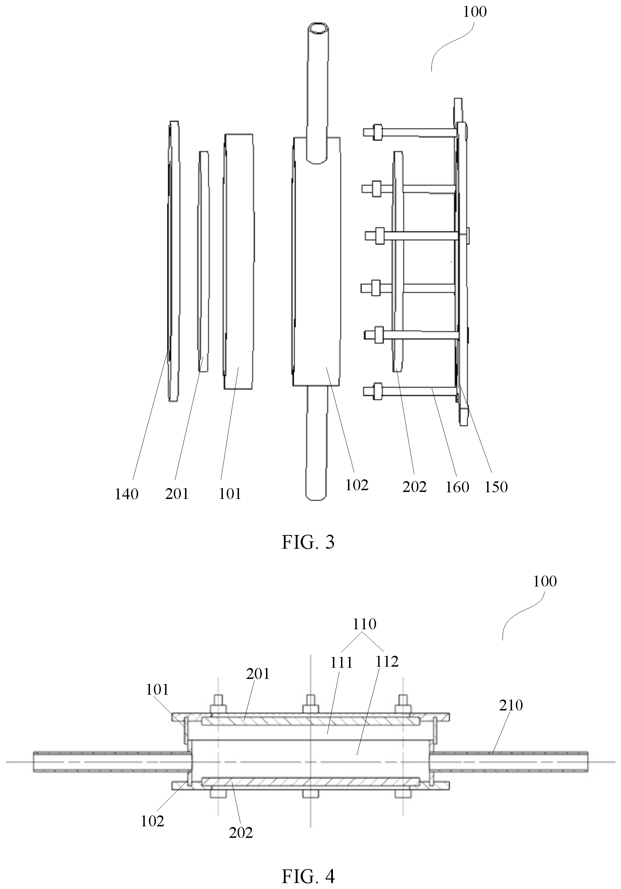

As shown in FIG. 1 to FIG. 5, an optical element 100 according to some embodiments of this application includes a base body 100a, a first light-transmitting plate 201, a second light-transmitting plate 202, and a flow guide tube 210. An optical channel is provided in the base body 100a, the first light-transmitting plate 201 and the second light-transmitting plate 202 respectively cover two ends of the optical channel to form an accommodating cavity 110, and the accommodating cavity 110 includes a first chamber 111 close to the first light-transmitting plate 201 and a second chamber 112 close to the second light-transmitting plate 202. The first chamber 111 is adapted to be filled with a gaseous medium, the second chamber 112 is adapted to be filled with a liquid medium 121, and a gas-liquid two-phase interface 120 is formed between the first chamber 111 and the second chamber 112. The flow guide tube 210 is in communication with the second chamber 112, and is configured to inject the liquid medium 121 into or extract the liquid medium 121 from the second chamber 112, to adjust a curvature of the interface 120.

In this embodiment of this application, the optical channel is provided in the base body 100a, and the first light-transmitting plate 201 and the second light-transmitting plate 202 are disposed at the two ends of the optical channel, so that the first light-transmitting plate 201, the second light-transmitting plate 202, and the base body 100a enclose to define the accommodating cavity 110. In use, the gaseous medium is filled in the first chamber 111 close to the first light-transmitting plate 201, and the liquid medium 121 is filled in the second chamber 112 close to the second light-transmitting plate 202, to form the gas-liquid two-phase interface 120 between the first chamber 111 and the second chamber 112. Further, the flow guide tube 210 is arranged to communicate with the second chamber 112, and the liquid medium 121 is injected into or extracted from the second chamber 112 through the flow guide tube 210, to adjust the curvature of the formed gas-liquid two-phase interface 120, thereby changing a light transmission path in the optical channel and achieving a precise optical zooming effect. The structure is simple and easy to operate.

Specifically, the optical element 100 includes the base body 100a, and an optical channel extending through the base body 100a is provided. In an extension direction of the optical channel, the first light-transmitting plate 201 is disposed at one end of the base body 100a, and the second light-transmitting plate 202 is disposed at the other end of the base body 100a. The first light-transmitting plate 201 and the second light-transmitting plate 202 are both connected to the base body 100a in a sealed configuration, thereby forming the accommodating cavity 110 enclosed by the first light-transmitting plate 201, the second light-transmitting plate 202, and the base body 100a.

The accommodating cavity 110 can be divided into two portions. One portion is the first chamber 111 close to the first light-transmitting plate 201, and the other portion is the second chamber 112 close to the second light-transmitting plate 202. Thus, the first chamber 111 may be filled with the gaseous medium, and the second chamber 112 may be filled with the liquid medium 121, to form the gas-liquid two-phase interface 120 between the first chamber 111 and the second chamber 112.

Meanwhile, the flow guide tube 210 is disposed at the base body 100a, and the flow guide tube 210 is in communication with the second chamber 112. The liquid medium 121 can be injected into the second chamber 112 or a portion of the liquid medium 121 in the second chamber 112 can be discharged through the flow guide tube 210, to change a filling amount of the liquid medium 121 in the second chamber 112, thereby adjusting the curvature of the formed gas-liquid two-phase interface 120.

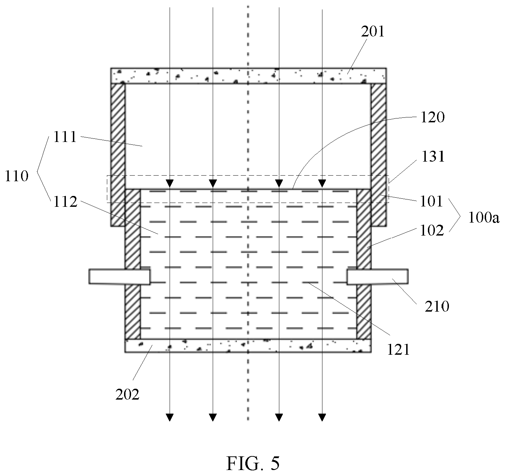

In specific application, as shown in FIG. 5 to FIG. 7, when external light enters the optical channel through the first light-transmitting plate 201 located at one end of the base body 100a, the light passes sequentially through the gaseous medium and the liquid medium 121, and then is emitted out via the second light-transmitting plate 202 located at the other end of the base body 100a. During this process, refraction occurs when the gas passes through the gas-liquid two-phase interface 120. Further, by adjusting the curvature of the formed gas-liquid two-phase interface 120, the light transmission path can be adjusted, thereby achieving an optical focusing effect.

In this embodiment of this application, the gas-liquid two-phase interface 120 formed between the gaseous medium and the liquid medium 121 is uniformly distributed in all portions, thereby ensuring uniformity of light transmission. Meanwhile, the purpose of zooming can be achieved by changing the filling amount of the liquid medium 121 in the second chamber 112. The structure is simple, the operation is convenient, and it is easy to control in practical use.

It will be noted that the base body 100a in this embodiment of this application may be an integral structure or a split structure. This is not limited herein.

In some embodiments, the gaseous medium may be a colorless transparent gas like air, nitrogen, or carbon dioxide; and the liquid medium 121 may be a polar transparent liquid like pure water, ethylene glycol, or propylene glycol, or may be a non-polar transparent liquid like silicone oil, chlorobenzene, or bromobenzene.

Certainly, specific types of the gaseous medium and the liquid medium 121 can be flexibly selected based on actual needs, provided that no chemical reaction occurs between the gaseous medium and the liquid medium 121. This is not limited to embodiments of this application.

In some other embodiments, as shown in FIG. 1, the optical element 100 may further include an upper cover plate 140, a lower cover plate 150, and a fastener 160. The upper cover plate 140 is disposed on a side of the first light-transmitting plate 201 that is away from the base body 100a, and the lower cover plate 150 is disposed on a side of the second light-transmitting plate 202 that is away from the base body 100a. The upper cover plate 140 and the lower cover plate 150 are detachably connected via the fastener 160. Thus, through cooperation between the upper cover plate 140 and the lower cover plate 150, the first light-transmitting plate 201, the second light-transmitting plate 202 and the base body 100a can be positioned and fixed.

The upper cover plate 140 and the lower cover plate 150 are provided with through holes at positions corresponding to the optical channel in the base body 100a, so that light can enter and exit the optical channel via the through holes.

Optionally, as shown in FIG. 5, a contact angle between an inner wall of the second chamber 112 and the liquid medium 121 is smaller than a contact angle between an inner wall of the first chamber 111 and the liquid medium 121.

In this embodiment of the application, the contact angle between the inner wall of the second chamber 112 and the liquid medium 121 is set to be smaller than the contact angle between the inner wall of the first chamber 111 and the liquid medium 121, that is, the inner wall of the second chamber 112 is more prone to being wetted by the liquid medium 121, so that the stable gas-liquid two-phase interface 120 can be formed between the first chamber 111 and the second chamber 112.

Meanwhile, because the contact angle of the inner wall of the second chamber 112 with the liquid medium 121 is different from the contact angle of the inner wall of the first chamber 111 with the liquid medium 121, the flow of the liquid medium 121 between the inner wall of the second chamber 112 and the inner wall of the first chamber 111 can be restricted. In this way, by changing the filling amount of the liquid medium 121 in the second chamber 112, a shape of the formed gas-liquid two-phase interface 120 changes accordingly, thereby achieving adjustment of the curvature of the gas-liquid two-phase interface 120, and thus achieving the purpose of optical zooming.

In a specific application, by using different materials at different positions of the base body 100a, or by designing a structure of the base body 100a, the contact angle between the inner wall of the second chamber 112 and the liquid medium 121 is made smaller than the contact angle between the inner wall of the first chamber 111 and the liquid medium 121. Certainly, another method may alternatively be adopted to control a value of the contact angle. This is not limited in this application.

Optionally, as shown in FIG. 5, the contact angle between the inner wall of the second chamber 112 and the liquid medium 121 is less than 90°, the contact angle between the inner wall of the second chamber 112 and the liquid medium 121 is greater than 90°.

In this embodiment of this application, the contact angle between the inner wall of the second chamber 112 and the liquid medium 121 is set to be less than 90°, so that the liquid medium 121 is prone to being wetted by the liquid medium 121; while the contact angle between the inner wall of the second chamber 112 and the liquid medium 121 is set to be greater than 90°, so that the inner wall of the second chamber 112 is less likely to be wetted by the liquid medium 121. In this way, the stable gas-liquid two-phase interface 120 can be formed between the first chamber 111 and the second chamber 112. Meanwhile, the flow of the liquid medium 121 between the inner wall of the second chamber 112 and the inner wall of the first chamber 111 can be further restricted, thereby facilitating precise control of the curvature of the gas-liquid two-phase interface 120, and achieving more precise optical zooming.

The contact angle between the inner wall of the second chamber 112 and the liquid medium 121 may be set to any angle such as 0°, 5°, 10°, 30°, 50°, 60°, 80°, or 89°, or a range between any two angles.

The contact angle between the inner wall of the second chamber 112 and the liquid medium 121 may be set to any angle such as 95°, 100°, 130°, 150°, 160°, or 180°, or a range between any two angles.

For example, the liquid medium 121 may be pure water. Correspondingly, the inner wall of the second chamber 112 may be configured to be hydrophilic, while the inner wall of the first chamber 111 is configured to be hydrophobic.

Alternatively, an oil solution may be selected as the liquid medium 121. Correspondingly, the inner wall of the second chamber 112 may be configured to be oleophilic, while the inner wall of the first chamber 111 is configured to be oleophobic.

Certainly, a type of the liquid medium 121 filled in the second chamber 112 and configuration of the inner walls of the first chamber 111 and the second chamber 112 may be flexibly designed by a person skilled in the art based on an actual requirement. This is not limited in embodiments of this application.

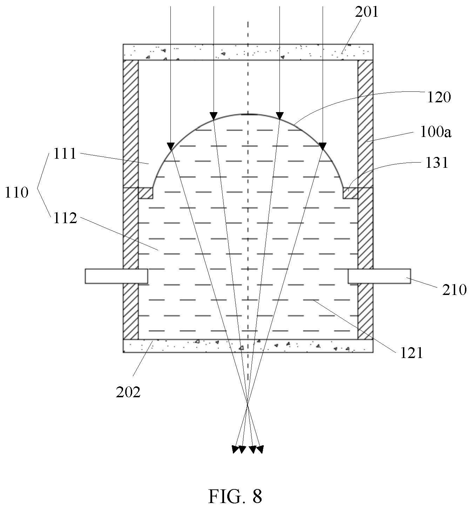

Optionally, as shown in FIG. 5 and FIG. 8, a flow restriction structure is provided between the inner wall of the first chamber 111 and the inner wall of the second chamber 112, and the flow restriction structure is configured to restrict the liquid medium 121 in the second chamber 112 from flowing to the first chamber 111.

In this embodiment of this application, the flow restriction structure is provided between the inner wall of the first chamber 111 and the inner wall of the second chamber 112, and the liquid medium 121 can be restricted, by the flow restriction structure, from flowing along the inner wall of the second chamber 112 to the inner wall of the first chamber 111. Thus, the filling amount of the liquid medium 121 in the second chamber 112 is changed, thereby achieving precise adjustment of a curvature change of the gas-liquid two-phase interface 120.

Optionally, as shown in FIG. 5 and FIG. 8, the flow restriction structure includes a step portion 131 disposed inside the base body 100a. The step portion 131 is disposed between the inner wall of the first chamber 111 and the inner wall of the second chamber 112, and the step portion 131 is configured to restrict the liquid medium 121 from flowing to the first chamber 111.

In this embodiment of this application, the step portion 131 is provided between the inner wall of the first chamber 111 and the inner wall of the second chamber 112, so that when the liquid medium 121 flows to the step portion 131, a surface tension that restricts movement of the liquid medium 121 is formed at a corner of the step portion 131 due to stress concentration. In this way, the stable gas-liquid two-phase interface 120 can be formed between the first chamber 111 and the second chamber 112. Meanwhile, the restriction of the step portion 131 facilitates precise control of the curvature of the gas-liquid two-phase interface 120 by changing the filling amount of the liquid medium 121, thereby achieving a more precise optical zooming effect.

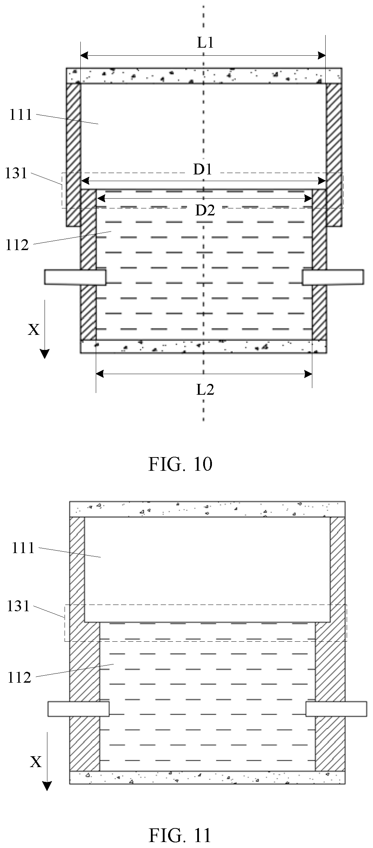

It will be understood that the step portion 131 may be formed by configuring a portion of an inner wall of the base body 100a that is between the first chamber 111 and the second chamber 112 to protrude and extend toward an interior of the accommodating cavity (as shown in FIG. 8); or the step portion 131 may be formed by configuring the inner wall of the first chamber 111 and the inner wall of the second chamber 112 to have different dimensions (as shown in FIG. 5 and FIG. 11).

Certainly, the step portion 131 may alternatively adopt another structure, provided that the liquid medium 121 in the second chamber 112 can be restricted from flowing along the inner wall of the second chamber 112 to the inner wall of the first chamber 111. This is not limited in embodiments of this application.

Optionally, as shown in FIG. 10 to FIG. 12, a direction from the first light-transmitting plate 201 to the second light-transmitting plate 202 is defined as a first direction X, and in a direction perpendicular to the first direction X, a dimension of the step portion 131 on a side close to the first chamber 111 is D1, and a dimension of the step portion 131 on a side close to the second chamber 112 is D2, satisfying: D1>D2.

In this embodiment of the application, the step portion 131 is provided on the inner wall of the second chamber 112 on a side close to the first chamber 111, and the dimension D1 of the step portion 131 on the side close to the first chamber 111 is set to be greater than the dimension D2 of the step portion 131 on the side close to the second chamber 112. Further, when the liquid medium 121 fully fills the second chamber 112, the surface tension of the liquid medium 121 increases at a corner of the step portion 131, thereby restricting further flow of the liquid medium 121. As a result, the stable gas-liquid two-phase interface 120 is formed between the first chamber 111 and the second chamber 112. By adjusting the filling amount of the liquid medium 121 in the second chamber 112, the curvature of the gas-liquid two-phase interface 120 can be precisely controlled.

It will be noted that the step portion 131 and the base body 100a may be an integral structure or a split structure. This may be flexibly set based on an actual requirement, which is not limited herein in this application.

Optionally, as shown in FIG. 5 to FIG. 7, the base body 100a includes a first base body 101 and a second base body 102. One end of the first base body 101 is sleeved over an outer side of one end of the second base body 102, to form the step portion 131 between the first base body 101 and the second base body 102. The first light-transmitting plate 201 is connected to the other end of the first base body 101, and the first light-transmitting plate 201 and the first base body 101 enclose to define the first chamber 111. The second light-transmitting plate 202 is connected to the other end of the second base body 102, and the second light-transmitting plate 202 and the second base body 102 enclose to define the second chamber 112.

In this embodiment of the application, the first base body 101 and the second base body 102 are connected in a sealed configuration to form the base body 100a, with one end of the first base body 101 sleeved over the outer side of one end of the second base body 102, to form the step portion 131 between the first base body 101 and the second base body 102. In this way, the step portion 131 at the end of the second base body 102 can not only restrict the flow of the liquid medium 121 but also facilitate actual processing and manufacturing.

It will be noted that the first base body 101 and the second base body 102 in this embodiment of this application may be made of a same material, or may be made of different materials. This is not limited in embodiments of this application.

In some embodiments, the first base body 101 and the second base body 102 may be made of different materials. For example, when the selected liquid medium 121 is an aqueous solution, the second base body 102 may be made of a hydrophilic material, and the first base body 101 may be made of a hydrophobic material. This can further restrict the flow of the liquid medium 121 on surfaces of the second base body 102 and the first base body 101, and facilitate the precise adjustment of the curvature of the gas-liquid two-phase interface 120.

Accordingly, when the selected liquid medium 121 is an oil solution, the first base body 101 is made of an oleophilic material, and the second base body 102 is made of an oleophobic material.

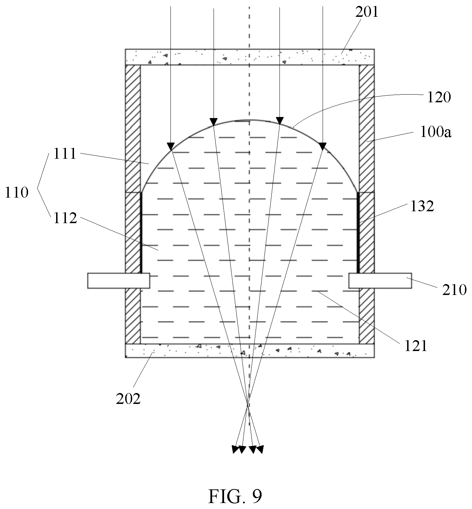

Optionally, as shown in FIG. 9, the flow restriction structure includes a modified material layer 132. The modified material layer 132 is at least partially disposed on a side of the inner wall of the second chamber 112 that is close to the first chamber 111, and a contact angle between the modified material layer 132 and the liquid medium 121 is less than 90°.

In this embodiment of this application, the modified material layer 132 is disposed on the inner wall of the second chamber 112 on the side close to the first chamber 111, so that the inner wall of the second chamber 112 is more prone to being wetted by the liquid medium 121, to form the stable gas-liquid two-phase interface 120 between the first chamber 111 and the second chamber 112. By adjusting the filling amount of the liquid medium 121 in the second chamber 112, the curvature of the gas-liquid two-phase interface 120 can be precisely controlled.

For example, the contact angle between the modified material layer 132 and the liquid medium 121 may be set to any angle such as 0°, 5°, 10°, 30°, 50°, 60°, 80°, or 89°, or a range between any two angles.

The modified material layer 132 may be coated on the inner wall of the second chamber 112 on the side close to the first chamber 111, or the entire inner wall of the second chamber 112 may be coated with the modified material layer 132. A specific structure of the modified material layer 132 may be flexibly set based on an actual requirement, and this is not limited in this application.

Optionally, as shown in FIG. 9, the modified material layer 132 is made of a hydrophilic material, and the second chamber 112 is adapted to be filled with an aqueous solution; or the modified material layer 132 is made of an oleophilic material, and the second chamber 112 is adapted to be filled with an oil solution. In this way, surface energy of the modified material layer 132 to the liquid medium 121 can be increased, thereby effectively restricting the liquid medium 121 from flowing from the inner wall of the second chamber 112 to the inner wall of the first chamber 111.

In some embodiments, the aqueous solution may include pure water, ethylene glycol, propylene glycol, or the like, and the hydrophilic material may include a fluoroalkyl acrylic oligomer, modified polypropylene, or the like. The oil solution may include silicone oil, chlorobenzene, bromobenzene, or the like, and the oleophilic material may include alkyl vinyl polymer fibers, long-chain alkyl methacrylate fibers, or the like. Certainly, the liquid medium 121 and the modified material layer 132 may alternatively be made of other materials. This is not limited in embodiments of this application.

Optionally, as shown in FIG. 10, the direction from the first light-transmitting plate 201 to the second light-transmitting plate 202 is defined as the first direction X. A maximum dimension of the first chamber 111 in the direction perpendicular to the first direction X is L1, and a height of the first chamber 111 in the first direction X is H1, satisfying: H1/L1≥0.25.

In this embodiment of this application, a value range of a ratio H1/L1 of the height H1 of the first chamber 111 to the maximum dimension L1 of the first chamber 111 is set, so that interference of a size of space inside the first chamber 111 on the gas-liquid two-phase interface 120 is reduced when the curvature of the formed gas-liquid two-phase interface 120 is changed, thereby ensuring use performance of the optical element 100.

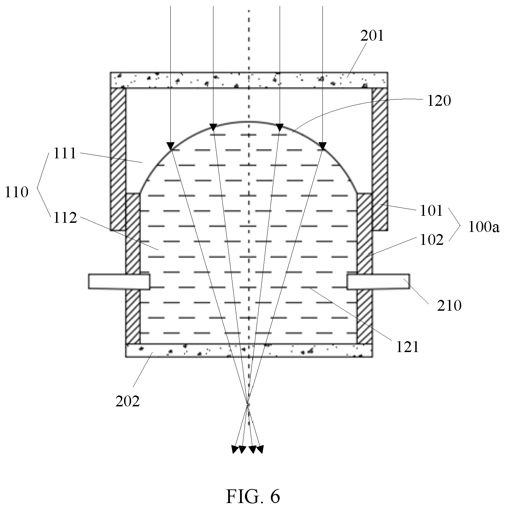

It will be understood that, as shown in FIG. 6, when the gas-liquid two-phase interface 120 is convex toward an interior of the first chamber 111, if the height H1 of the first chamber 111 is too small, the convex gas-liquid two-phase interface 120 may come into contact with the first light-transmitting plate 201, thereby affecting stability of the gas-liquid two-phase interface 120.

For example, the ratio H1/L1 of the height H1 of the first chamber 111 to the maximum dimension L1 of the first chamber 111 may be set to any value such as 0.25, 0.3, 0.5, 1.0, 2.0, 2.5, 5.0, or 10, or a range between any two values.

In some embodiments, as shown in FIG. 10, the maximum dimension L1 of the first chamber 111 in the direction perpendicular to the first direction X satisfies: 10 mm≤L1≤500 mm. The value range of the maximum dimension L1 of the first chamber 111 is set, thereby not only ensuring sufficient space within the first chamber 111 for light to pass through, but also preventing the dimension of the first chamber 111 from being too large, which would otherwise affect the formation of the gas-liquid two-phase interface 120.

For example, the maximum dimension L1 of the first chamber 111 may be set to any value such as 10 mm, 30 mm, 50 mm, 80 mm, 100 mm, 150 mm, 200 mm, 250 mm, 300 mm, 350 mm, 400 mm, 450 mm, or 500 mm, or a range between any two values.

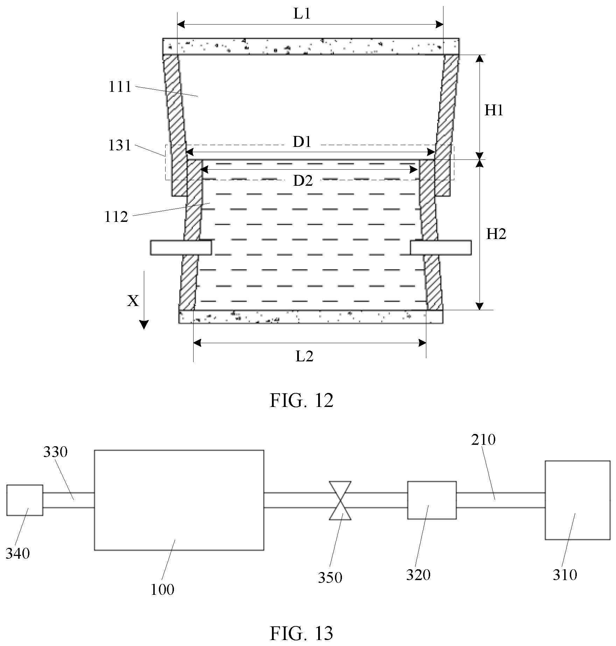

It will be understood that the dimension D1 of the step portion 131 on the side close to the first chamber 111 and the maximum dimension L1 of the first chamber 111 may be set equal to each other (as shown in FIG. 10), or may be set unequal to each other (as shown in FIG. 12). This may be flexibly set based on an actual requirement, which is not limited to embodiments of this application.

Optionally, as shown in FIG. 10, the direction from the first light-transmitting plate 201 to the second light-transmitting plate 202 is defined as the first direction X. A maximum dimension of the second chamber 112 in the direction perpendicular to the first direction X is L2, and a height of the second chamber 112 in the first direction X is H2, satisfying: H2/L2≥0.25.

In this embodiment of this application, a value range of a ratio H2/L2 of the height H2 of the second chamber 112 to the maximum dimension L2 of the second chamber 112 is set, so that interference of a size of space of the second chamber 112 on the gas-liquid two-phase interface 120 is reduced when the curvature of the formed gas-liquid two-phase interface 120 is changed, thereby ensuring the use performance of the optical element 100.

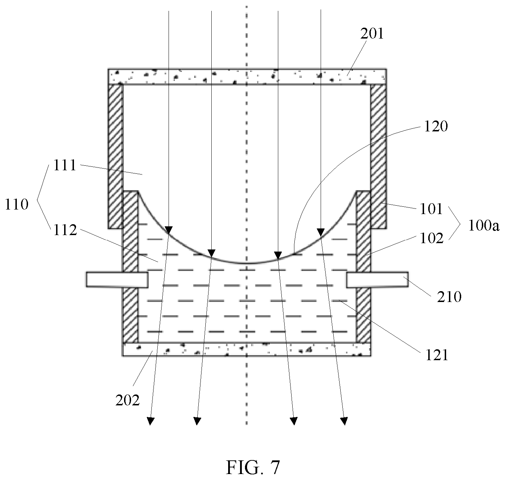

It will be understood that, as shown in FIG. 7, when the gas-liquid two-phase interface 120 is concave toward an interior of the second chamber 112, if the height H2 of the second chamber 112 is too small, the concave gas-liquid two-phase interface 120 may come into contact with the second light-transmitting plate 202, thereby affecting the stability of the gas-liquid two-phase interface 120.

For example, the ratio H2/L2 of the height H2 of the second chamber 112 to the maximum dimension L2 of the second chamber 112 may be set to any value such as 0.25, 0.3, 0.5, 1.0, 2.0, 2.5, 5.0, or 10, or a range between any two values.

In some embodiments, as shown in FIG. 10, the maximum dimension L2 of the second chamber 112 in the direction perpendicular to the first direction X satisfies: 10 mm≤L2≤500 mm. The value range of the maximum dimension L2 of the second chamber 112 is set, thereby not only ensuring sufficient space within the second chamber 112 for light to pass through, but also preventing the dimension of the second chamber 112 from being too large, which would otherwise affect the formation of the gas-liquid two-phase interface 120.

For example, the maximum dimension L2 of the second chamber 112 may be set to any value such as 10 mm, 30 mm, 50 mm, 80 mm, 100 mm, 150 mm, 200 mm, 250 mm, 300 mm, 350 mm, 400 mm, 450 mm, or 500 mm, or a range between any two values.

It will be noted that the maximum dimension L1 of the first chamber 111 and the maximum dimension L2 of the second chamber 112 are a straight-line distance between two opposite endpoints on the inner wall of the first chamber 111 or the inner wall of the second chamber 112 in the first direction X. A plurality of values can be measured by using a measuring tool like a caliper, and a maximum value is taken as a final measured value.

For example, if the first chamber 111 and the second chamber 112 are both configured as cylinders, then the maximum dimension L1 of the first chamber 111 is a diameter of the cylinder corresponding to the first chamber 111, and the maximum dimension L2 of the second chamber 112 is a diameter of the cylinder corresponding to the second chamber 112.

It will be understood that the dimension D2 of the step portion 131 on the side close to the second chamber 112 and the maximum dimension L2 of the second chamber 112 may be set equal to each other (as shown in FIG. 10), or may be set unequal to each other (as shown in FIG. 12). This may be flexibly set based on an actual requirement, which is not limited to embodiments of this application.

### Embodiment 1

The liquid medium 121 is pure water with a refractive index of 1.33 and an Abbe number of 55.8; and the optical glass is K9 glass with a refractive index of 1.52 and an Abbe number of 64.2. A diameter of the optical channel is 50 mm, and the height of the first chamber 111 and the height of the second chamber 112 are both 30 mm. Pure water is injected into or extracted from the second chamber 112, changing a radius of curvature of the gas-liquid two-phase interface 120, thereby achieving a zoom effect.

As shown in FIG. 6, pure water is injected into the second chamber 112, so that the optical element 100 forms a positive lens to achieve a light-converging effect, and a focal length can be varied within a range of [75.7 mm, +∞). Conversely, as shown in FIG. 7, pure water is extracted from the second chamber 112, so that the optical element 100 forms a negative lens to achieve a light-diverging effect, and a focal length of the optical element 100 can be varied within a range of [-75.7 mm, -∞).

### Embodiment 2

A difference from Embodiment 1 lies in that a diameter of the optical channel is 100 mm, and the height of the first chamber 111 and the height of the second chamber 112 are both 55 mm. Pure water is injected into or extracted from the second chamber 112, changing a radius of curvature of the gas-liquid two-phase interface 120, so that a focal length of the optical element 100 can be varied within ranges of [151.3 mm, +∞) and [-151.3 mm, -∞).

### Embodiment 3

A difference from Embodiment 1 lies in that the liquid medium 121 is silicone oil with a refractive index of 1.65 and an Abbe number of 62.8; and the inner wall of the second chamber 112 is made of an oleophilic material like alkyl vinyl polymer fibers, and pure silicone oil is injected into or extracted from the second chamber 112, changing a radius of curvature of the gas-liquid two-phase interface 120, so that a focal length of the optical element 100 can be varied within ranges of [38.5 mm, +∞) and (-38.5 mm, -∞).

Optionally, as shown in FIG. 5 to FIG. 7, an embodiment of this application further provides a lens, including a gaseous medium, a liquid medium, and the optical element 100 according to any of the foregoing embodiments. The gaseous medium is filled in the first chamber 111, and the liquid medium is filled in the second chamber 112, to form the gas-liquid two-phase interface 120 between the first chamber 111 and the second chamber 112.

In this embodiment of the application, the optical channel is provided in the base body 100a, and the first light-transmitting plate 201 and the second light-transmitting plate 202 are disposed at the two ends of the optical channel, so that the first light-transmitting plate 201, the second light-transmitting plate 202, and the base body 100a may enclose to define the accommodating cavity 110. In use, the gaseous medium is filled in the first chamber 111 close to the first light-transmitting plate 201, and the liquid medium 121 is filled in the second chamber 112 close to the second light-transmitting plate 202, to form the gas-liquid two-phase interface 120 between the first chamber 111 and the second chamber 112. Further, the flow guide tube 210 is arranged to communicate with the second chamber 112, and the liquid medium 121 is injected into or extracted from the second chamber 112 through the flow guide tube 210, to adjust the curvature of the formed gas-liquid two-phase interface 120, thereby changing a light transmission path in the optical channel and achieving a precise optical zooming effect. The structure is simple and easy to operate.

For specific selection of the gaseous medium and the liquid medium, refer to the foregoing content. Details are not described in this embodiment of this application.

Optionally, as shown in FIG. 13, an embodiment of this application further provides an optical system, including a liquid storage apparatus 310, a liquid injection pump 320, and the optical element 100 according to any of the foregoing embodiments, or the lens as described in the foregoing embodiment. An end of the flow guide tube 210 that is away from the base body 100a is in communication with the liquid storage apparatus 310, and the liquid injection pump 320 is connected to the flow guide tube 210.

In this embodiment of the application, the optical channel is provided in the base body 100a, and the first light-transmitting plate 201 and the second light-transmitting plate 202 are disposed at the two ends of the optical channel, so that the first light-transmitting plate 201, the second light-transmitting plate 202, and the base body 100a may enclose to define the accommodating cavity 110. In use, the gaseous medium is filled in the first chamber 111 close to the first light-transmitting plate 201, and the liquid medium 121 is filled in the second chamber 112 close to the second light-transmitting plate 202, to form the gas-liquid two-phase interface 120 between the first chamber 111 and the second chamber 112. Furthermore, the liquid medium 121 is injected into or extracted from the second chamber 112 through liquid injection pump 320 and flow guide tube 210, to adjust the curvature of the formed gas-liquid two-phase interface 120, thereby changing a light transmission path in the optical channel and achieving a stable optical zooming effect. The structure is simple and easy to operate.

Specifically, the liquid storage apparatus 310 is configured to store the liquid medium 121. The liquid storage apparatus 310 is in communication with the second chamber 112 through the flow guide tube 210. The liquid injection pump 320 is disposed in the flow guide tube 210. The liquid injection pump 320 can be used to pump the liquid medium 121 from the liquid storage apparatus 310 into the second chamber 112, or to partially pump the liquid medium 121 from the second chamber 112 back into the liquid storage apparatus 310.

Specific structures and types of the liquid storage apparatus 310 and the liquid injection pump 320 may be set based on an actual requirement. This is not limited in embodiments of this application.

Optionally, as shown in FIG. 13, the optical system further includes a monitoring tube 330 and a pressure measuring element 340. One end of the monitoring tube 330 is in communication with the second chamber 112, the other end of the monitoring tube 330 is connected to the pressure measuring element 340, and the pressure measuring element 340 is configured to detect a pressure of the liquid medium 121 in the second chamber 112.

In this embodiment of this application, the pressure measuring element 340 is connected to the second chamber 112 through the monitoring tube 330, so that the pressure of the liquid medium 121 in the second chamber 112 can be detected by the pressure measuring element 340, to accurately control the filling amount of the liquid medium 121 in the second chamber 112, thereby achieving the purpose of precise zooming.

In some embodiments, a shut-off valve 350 may be further disposed in the flow guide tube 210. The shut-off valve 350 is disposed between the second chamber 112 and the liquid injection pump 320, to control the flow of the liquid medium 121 in the flow guide tube 210 and improve the precise control of the filling amount of the liquid medium 121 in the second chamber 112.

In addition, the optical system further includes a light source. The light source can emit light into the optical channel of the base body 100a, to achieve the purpose of optical zooming.

In some embodiments, a method of using the optical system in this application is as follows: when the optical element 100 is in use, the liquid medium 121 is injected into the second chamber 112 by the liquid injection pump 320, so that the optical element 100 forms a flat lens. Then, the liquid injection pump 320 is used to inject the liquid medium 121 into the second chamber 112, so that the optical element 100 forms a positive lens (as shown in FIG. 6); or the liquid injection pump 320 is used to extract at least a portion of the liquid medium 121 from the second chamber 112, so that the optical element 100 forms a negative lens (as shown in FIG. 7). Then, a pressure change in the second chamber 112 is monitored by the pressure measuring element 340, a corresponding focal length value of the optical element 100 is obtained, and a pressure-focal length relationship curve is obtained through analysis and fitting. Then, by adjusting the pressure value, precise adjustment of the focal length can be achieved.

Optionally, an embodiment of this application further provides an electronic device, including the optical system according to the foregoing embodiments.

In this embodiment of this application, the optical channel is provided in the base body 100a, and the first light-transmitting plate 201 and the second light-transmitting plate 202 are disposed at the two ends of the optical channel, so that the first light-transmitting plate 201, the second light-transmitting plate 202, and the base body 100a may enclose to define the accommodating cavity 110. In use, the gaseous medium is filled in the first chamber 111 close to the first light-transmitting plate 201, and the liquid medium 121 is filled in the second chamber 112 close to the second light-transmitting plate 202, to form the gas-liquid two-phase interface 120 between the first chamber 111 and the second chamber 112. Furthermore, the liquid medium 121 is injected into or extracted from the second chamber 112 through liquid injection pump 320 and flow guide tube 210, to adjust the curvature of the formed gas-liquid two-phase interface 120, thereby changing a light transmission path in the optical channel and achieving a stable optical zooming effect. The structure is simple and easy to operate.

In the descriptions of this specification, descriptions with reference to the term like "an embodiment", "some embodiments", "illustrative embodiment", "example", "specific example", or "some examples" mean that specific features, structures, materials, or characteristics described with reference to the embodiment or example are included in at least one embodiment or example of this application. In this specification, illustrative expressions of the foregoing terms do not necessarily refer to a same embodiment or example. In addition, the described specific features, structures, materials, or characteristics may be combined in a proper manner in any one or more of embodiments or examples.

Although embodiments of this application have been shown and described, a person of ordinary skill in the art may appreciate that various changes, modifications, replacements, and variations may be made to these embodiments without departing from the principle and spirit of this application. The scope of this application is defined by the claims and equivalents thereof.

## Claims

1. An optical element (100), comprising: a base body (100a), a first light-transmitting plate (201), a second light-transmitting plate (202), and a flow guide tube (210), wherein
an optical channel is provided in the base body (100a), the first light-transmitting plate (201) and the second light-transmitting plate (202) respectively cover two ends of the optical channel to form an accommodating cavity (110), the accommodating cavity (110) comprises a first chamber (111) close to the first light-transmitting plate (201) and a second chamber (112) close to the second light-transmitting plate (202); and
the first chamber (111) is adapted to be filled with a gaseous medium, the second chamber (112) is adapted to be filled with a liquid medium (121), and the flow guide tube (210) is in communication with the second chamber (112) and is configured to inject the liquid medium (121) into or extract the liquid medium (121) from the second chamber (112), to adjust a curvature of a gas-liquid two-phase interface (120) formed by the gaseous medium and the liquid medium (121).

2. The optical element (100) according to claim 1, wherein a contact angle between an inner wall of the second chamber (112) and the liquid medium (121) is smaller than a contact angle between an inner wall of the first chamber (111) and the liquid medium (121).

3. The optical element (100) according to claim 2, wherein the contact angle between the inner wall of the second chamber (112) and the liquid medium (121) is less than 90°, the contact angle between the inner wall of the second chamber (112) and the liquid medium (121) is greater than 90°.

4. The optical element (100) according to any one of claims 1 to 3, wherein a flow restriction structure is provided between the inner wall of the first chamber (111) and the inner wall of the second chamber (112), and the flow restriction structure is configured to restrict the liquid medium (121) from flowing to the first chamber (111).

5. The optical element (100) according to claim 4, wherein the flow restriction structure comprises a step portion (131) disposed inside the base body (100a), the step portion (131) is disposed between the inner wall of the first chamber (111) and the inner wall of the second chamber (112), and the step portion (131) is configured to restrict the liquid medium (121) from flowing to the first chamber (111).

6. The optical element (100) according to claim 5, wherein
a direction from the first light-transmitting plate (201) to the second light-transmitting plate (202) is defined as a first direction (X), and in a direction perpendicular to the first direction (X), a dimension of the step portion (131) on a side close to the first chamber (111) is D1, and a dimension of the step portion (131) on a side close to the second chamber (112) is D2, satisfying: D1>D2.

7. The optical element (100) according to claim 6, wherein the base body (100a) comprises a first base body (101) and a second base body (102);
one end of the first base body (101) is sleeved over an outer side of one end of the second base body (102), to form the step portion (131) between the first base body (101) and the second base body (102); and
the first light-transmitting plate (201) is connected to the other end of the first base body (101), and the first light-transmitting plate (201) and the first base body (101) enclose to define the first chamber (111); and the second light-transmitting plate (202) is connected to the other end of the second base body (102), and the second light-transmitting plate (202) and the second base body (102) enclose to define the second chamber (112).

8. The optical element (100) according to any one of claims 4 to 7, wherein the flow restriction structure comprises a modified material layer (132), the modified material layer (132) is at least partially disposed on a side of the inner wall of the second chamber (112) that is close to the first chamber (111), and a contact angle between the modified material layer (132) and the liquid medium (121) is less than 90°.

9. The optical element (100) according to claim 8, wherein the modified material layer (132) is made of a hydrophilic material, and the second chamber (112) is adapted to be filled with an aqueous solution; or
the modified material layer (132) is made of an oleophilic material, and the liquid medium (121) adapted to be filled in the second chamber (112) is an oil solution.

10. The optical element (100) according to any one of claims 1 to 9, wherein the direction from the first light-transmitting plate (201) to the second light-transmitting plate (202) is defined as the first direction (X); and a maximum dimension of the first chamber (111) in the direction perpendicular to the first direction (X) is L1, and a height of the first chamber (111) in the first direction (X) is H1, satisfying: H1/L1≥0.25; and/or
in the direction perpendicular to the first direction (X), the maximum dimension L1 of the first chamber (111) satisfies: 10 mm≤L1≤500 mm.

11. The optical element (100) according to any one of claims 1 to 10, wherein the direction from the first light-transmitting plate (201) to the second light-transmitting plate (202) is defined as the first direction (X); and a maximum dimension of the second chamber (112) in the direction perpendicular to the first direction (X) is L2, and a height of the second chamber (112) in the first direction (X) is H2, satisfying: H2/L2≥0.25; and/or
in the direction perpendicular to the first direction (X), the maximum dimension L2 of the second chamber (112) satisfies: 10 mm≤L2≤500 mm.

12. A lens, comprising: a gaseous medium, a liquid medium (121), and the optical element (100) according to any one of claims 1 to 11, wherein the gaseous medium is filled in the first chamber (111), and the liquid medium (121) is filled in the second chamber (112), to form the gas-liquid two-phase interface (120) between the first chamber (111) and the second chamber (112).

13. An optical system, comprising: a liquid storage apparatus (310), a liquid injection pump (320), and the optical element (100) according to any one of claims 1 to 11, or the lens according to claim 12, wherein an end of the flow guide tube (210) that is away from the base body (100a) is in communication with the liquid storage apparatus (310), and the liquid injection pump (320) is connected to the flow guide tube (210).

14. The optical system according to claim 13, wherein the optical system further comprises a monitoring tube (330) and a pressure measuring element (340), one end of the monitoring tube (330) is in communication with the second chamber (112), the other end of the monitoring tube (330) is connected to the pressure measuring element (340), and the pressure measuring element (340) is configured to detect a pressure of the liquid medium (121) in the second chamber (112).

15. An electronic device, comprising the optical system according to claim 13 or 14.
